# EUROPEAN PATENT SPECIFICATION

(11) **EP 3 637 394 B1**
(45) Date of publication and mention of the grant of the patent: **24.02.2021**
(21) Application number: 18817284.5
(22) Date of filing: 19.03.2018
(51) Int. Cl.: F16B 5/00, G09F 9/33

(54) **MODULE CONNECTION STRUCTURE AND LED DISPLAY SCREEN**
MODULVERBINDUNGSSTRUKTUR UND LED-ANZEIGEBILDSCHIRM
STRUCTURE DE CONNEXION DE MODULE ET ÉCRAN D'AFFICHAGE À DEL

(30) Priority: 12.06.2017 CN 201710438606
(43) Date of publication of application: 15.04.2020
(73) Proprietor: Hunan Minghe Opto Tech Co., Ltd, Changsha, Hunan 410000 (CN)
(72) Inventor: FU, Gaowu, Changsha, Hunan 410000 (CN); WU, Zhenzhou, Changsha, Hunan 410000 (CN); KUANG, Wenqi, Changsha, Hunan 410000 (CN); LIU, Guangxi, Changsha, Hunan 410000 (CN)
(74) Representative: Hanna Moore + Curley
(86) International application number: PCT/CN2018/079456
(87) International publication number: WO 2018/228008

(56) References cited:
- CN-A- 103 971 607
- CN-A- 107 061 437
- CN-U- 202 732 571
- CN-U- 204 113 825
- CN-U- 204 991 019
- CN-U- 206 785 799
- JP-A- 2007 270 999

## Description

### BACKGROUND OF THE INVENTION

### Technical Field

The invention relates to the technical field of display screen installation accessories, in particular to a module connection structure and an LED display screen.

### 2. Description of Related Art

LED display screens are being applied more and more widely with the development of society. The LED display screens are generally applied to large-area screen display which is fulfilled by splicing LED display screen unit boxes one by one. Traditional unit boxes are connected through connection sheets and locked through bolts or are connected through simple quick locks, in this case, the efficiently is low and the operation time is long during splicing, and the installation of the boxes needs to be completed by the cooperation of at least two workers and cannot be completed by one worker, and consequentially, the installation efficiency is greatly lowered. In a case of a large LED display screen area, short construction time and limited number of construction workers, it is difficult to meet the usage requirements.

### BRIEF SUMMARY OF THE INVENTION

The patent application for invention Application No.201410228846.0 discloses a display screen assembly device. The display screen assembly device comprises a first support body, a second support body used for connecting two adjacent display screen units or display screen boxes in cooperation with the first support body, and a locking mechanism which can be locked and unlocked, wherein a hand lever, a driving gear, and racks provide a locking force for driving the locking mechanism. Although the display screen assembly device can fulfill the assembly and disassembly of display screens, at least two display screen assembly devices need to be installed between every two adjacent display screens in use; and the display screen assembly device is directly locked through the cooperation of a hook and a column, as a result, two display screen modules and the assembly devices on two display screens need to be manually located in advance, the operation cannot be completed by one worker, and consequentially, the installation efficiency is low. The adjacent display screens are connected only by means of the assembly devices, the assembly devices are concentratedly stressed at the edges of the display screens, and consequentially, the installation structure is not tight or firm sufficiently. CN 204113825 U discloses a LED box connecting lock.

The primary objective of the invention is to provide a module connection structure to solve the problems of low installation efficiency and insufficient structural stability of existing display screen connection structures.

To fulfill the above-mentioned objective, a module connection structure provided by the invention comprises a locking part, a cooperation part, and a handle, wherein:

The locking part includes:
A locking part front plate formed a hand lever rotation hole and a shifting sheet slide hole which are in a strip shape and in parallel;
A locking part top plate and a locking part bottom plate which are oppositely arranged on one side of the locking part front plate;
A hanger rod which movably penetrates through the locking part top plate and the locking part bottom plate, is perpendicular to the hand lever rotation hole and has an end stretching out of the locking part top plate to radially extend to form a strip-shaped block;
A rotation sheet fixedly connected to the middle of the hanger rod;
A slide plate connected to the rotation sheet;
An extension spring which has one end connected to the slide plate and the other end fixed to the locking part front plate in an extension state;
A slidable shifting sheet which is arranged on the other side of the locking part front plate and is connected to the slide plate through a shifting sheet connection rod penetrating through the shifting sheet slide hole;
A threaded bushing which is disposed on the hanger rod and peripherally provided with a threaded segment and a non-threaded segment, wherein an end, provided with the non-threaded segment, of the threaded bushing abuts against the rotation sheet, a slot parallel to the axis of the hanger rod is formed in the non-threaded segment, and a limit column is arranged on the locking part front plate and located in the slot;
A locking hand lever which is in threaded connection with the threaded segment of the threaded bushing and has an end, far away from the rotation sheet, abutting against the locking part top plate; and
A compression spring which is arranged on the hanger rod between the rotation sheet and the locking part bottom plate and is in a compressed state;

The cooperation part includes;
A cooperation part bottom plate which is parallel to the locking part top plate and is formed with a location hole identical to the strip-shaped block in shape; and
The handle is connected between the locking part top plate and the cooperation part bottom plate.

Preferably, the hanger rod in an axial direction sequentially includes:
A thick segment connected to the strip-shaped block;
A step segment having a square radial section which has a side length not greater than the diameter of the thick segment, wherein a square hole matched with the square step segment is formed in the rotation sheet installed on the step segment;
A hanger rod threaded segment provided with a stop nut; and
A thin segment penetrating through the locking part bottom plate.

Preferably, the slide plate includes:
A flat plate part which has a face formed with:
A rotation sheet connection part formed with a rotation sheet installation hole parallel to the hanger rod in an axial direction, wherein a rotation sheet driving rod is arranged on the rotation sheet and is installed in the rotation sheet installation hole; and
Two opposite shifting sheet connection parts formed with shifting sheet installation holes, wherein a flat plate through hole is formed in the flat plate part between the two shifting sheet connection parts, the shifting sheet connection rod has one end fixed to the slidable shifting sheet and the other end formed with a connection rod through hole, and the end, formed with the connection rod through hole, of the shifting sheet connection rod penetrates through the shifting sheet slide hole and the flat plate through hole and is connected to the slide plate through a rotary shaft pin which penetrates through the shifting sheet installation holes and the connection rod through hole.

Preferably, the slide plate further includes:
An opening part formed in an end, far away from the shifting sheet connection parts, of the flat plate part, wherein the extension spring is connected to the rotation sheet connection part, and the bottom of the opening part is close to the rotation sheet connection part to allow the extension spring to extend.

Preferably, the locking part front plate is provided with a stop screw to make sure that the flat plate part is fixed in a direction perpendicular to the locking part front plate and is able to slide in the shifting sheet slide hole.

Preferably, a clamping slot perpendicular to the shifting sheet slide hole is formed in an end, far away from the extension spring, of the shifting sheet slide hole.

Preferably, the locking part further includes:
A location pin which is arranged on the locking part top plate and is parallel to the hanger rod; and
The cooperation part further includes:
   A location pin hole which is formed in the cooperation part bottom plate and is matched with the location pin.

Preferably, the cooperation part further includes:
A cooperation part front plate connected to the cooperation part bottom plate;
A cooperation part side plate connected to the cooperation part front plate and the cooperation part bottom plate; and
The locking part further includes:
   A locking part side plate connected to the locking part top plate, the locking part front plate, and the locking part bottom plate, wherein the cooperation part front plate, the cooperation part bottom plate, the locking part top plate, the locking part front plate, and the locking part bottom plate perpendicularly extend to the same side of the handle.

Preferably, the handle includes:
A lock catch part which has an external end located in the same plane as the cooperation part side plate and the locking part side plate and is formed with a lock catch installation hole and provided with a lock catch having one end provided with a lock catch handle and the other end radially extending to form a protruding column.

An LED display screen provided by the invention is formed by splicing a plurality of LED display screen unit boxes, and each LED display screen unit box comprise a box frame provided with any module connection structure mentioned above.

### BENEFICIAL EFFECTS OF THE INVENTION

Compared with the prior art, the technical solution of the invention has the following beneficial effects:
1. The locking part and the cooperation part are integrally arranged at the head end and the tail end of the handle. When a plurality of modules need to be connected together, the module connection structure is arranged on each module first, and then the cooperation part of the module is fixedly connected to the locking part of the adjacent module. When the modules are connected, workers can align the modules in place and can perform operation conveniently through the handle, and using is convenient. After the modules are connected, the modules are connected together through a plurality of handles, and a whole frame is formed in a plane having the module located between every two adjacent handles. Compared with existing module assembly structures which are only arranged at local edges of modules and are likely to get loose if the modules are unaligned slightly, the handle of the module connection structure of the invention is attached to each module at the overall altitude, and the cooperation part and the locking part are connected to the head end and the tail end of the handle, so that the location is convenient, and the stress directions of the head end and the tail end are consistent, which fulfills stability and firmness.
2. Two vertically adjacent modules are connected through the hanger rod and the strip-shaped block. The slidable shifting sheet drives the slide plate to move, the slide plate drives the rotation sheet to rotate to drive the hanger rod to rotate; and when the hanger rod rotates by 90°, the strip-shaped block enters the location hole, the slidable shifting sheet is released, and the rotation sheet returns to the original position under the action of the tensile force from the extension spring, so that the two modules are connected together. During operation, a worker aligns and stably holds the two modules, holds the handle with one hand, and then shifts the slidable shifting sheet with the thumb to complete the installation, so that the assembly and disassembly can be independently completed by one worker. Thus, the labor intensity is reduced, other tools such as a screwdriver do not need to be used, the working efficiency is improved, the construction period is shortened, and the usage cost is decreased.
3. The two connected modules are further locked through the threaded bushing and the locking hand lever. The locking hand lever is rotated to drive the threaded bushing to downwards move through the rotation of threads so as to decrease the distance between the two modules, so that the two modules are further locked. Thus, after being installed, the two modules can be locked more firmly to prevent the junction surfaces of the two modules against looseness, so that the installation is firm and stable.

### BRIEF DESCRIPTION OF THE SEVERAL VIEWS OF THE DRAWINGS

For the sake of a clearer explanation of the technical solutions of the embodiments of the invention or the prior art, a brief description of the accompanying drawings required for the description of these embodiments is given below. Clearly, the drawings in the following description are only used for illustrating certain embodiments of the invention, and those ordinarily skilled in the art can acquire other drawings according to the structures shown in following ones without creative labor.
Fig. 1 is a perspective view of a module connection structure in an embodiment of the invention;
Fig. 2 is a connection principle diagram 1 of the module connection structure in Fig. 1;
Fig. 3 is a connection principle diagram 2 of the module connection structure in Fig. 1;
Fig. 4 is an internal exploded view of a locking part of the module connection structure in Fig. 1;
Fig. 5 is a sectional view of the locking part of the module connection structure in Fig. 1;
Fig. 6 is a structural view of the module connection structures, installed on LED display screen unit boxes, in Fig. 1;
Fig. 7 is an exploded view of Fig. 6.

**Reference signs in the accompanying drawings of the invention:**

| Reference Signs | Name | Reference Signs | Name |
|---|---|---|---|
| 1 | Locking part | 214 | Hanger rod threaded segment |
| 2 | Cooperation part | 215 | Thin segment |
| 3 | Handle | 221 | Rotation sheet driving rod |
| 11 | Locking part front plate | 231 | Flat plate part |
| 12 | Locking part top plate | 232 | Rotation sheet connection part |
| 13 | Locking part bottom plate | 233 | Shifting sheet connection part |
| 14 | Locking part side plate | 234 | Rotation sheet installation hole |
| 15 | Limit column | 235 | Shifting sheet installation hole |
| 16 | Stop screw | 236 | Rotary shaft pin |
| 17 | Location pin | 237 | Opening part |
| 21 | Hanger rod | 251 | Shifting sheet connection rod |
| 22 | Rotation sheet | 252 | Connection rod through hole |
| 23 | Slide plate | 261 | Threaded segment |
| 24 | Extension spring | 262 | Non-threaded segment |
| 25 | Slidable shifting sheet | 263 | Slot |
| 26 | Threaded bushing | 31 | Cooperation part bottom plate |
| 27 | Locking hand lever | 311 | Location hole |
| 28 | Compression spring | 312 | Location pin hole |
| 29 | Stop nut | 32 | Cooperation part front plate |
| 111 | Hand lever rotation hole | 33 | Cooperation part side plate |
| 112 | Shifting sheet slide hole | 41 | External end |
| 113 | Clamping slot | 42 | Lock catch installation hole |
| 211 | Strip-shaped block | 43 | Lock catch |
| 212 | Thick segment | 44 | Lock catch handle |
| 213 | Lug boss segment | 45 | Protruding column |

The objective, functional characteristics, and advantages of the invention are further explained below in combination with the embodiments and accompanying drawings.

### DETAILED DESCRIPTION OF THE INVENTION

The technical solution of the invention is further explained below in combination with the accompanying drawings in the specification and embodiments. It should be noted that the explanations of these embodiments are used for assisting in understanding the invention, and are not used for limiting the invention. Besides, the technical features involved in the following embodiments of the invention can be combined without conflicting with one another.

The invention provides a module connection structure.

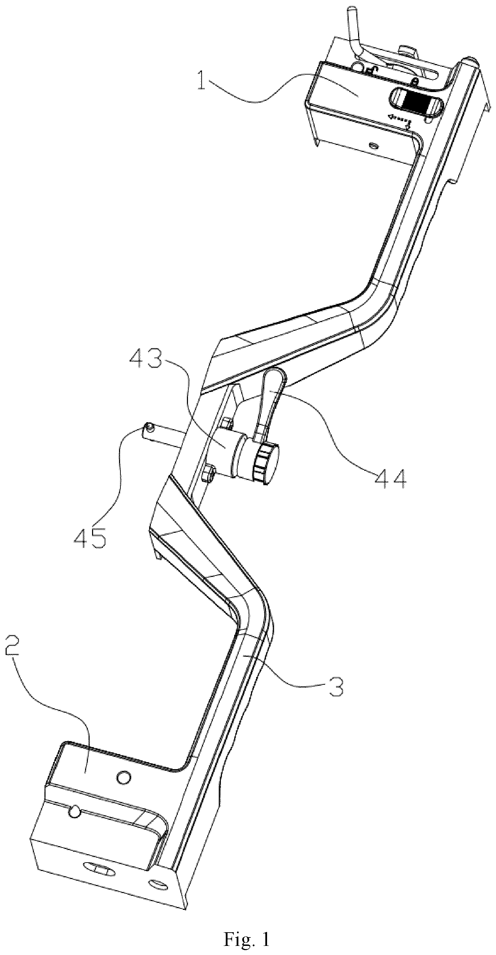

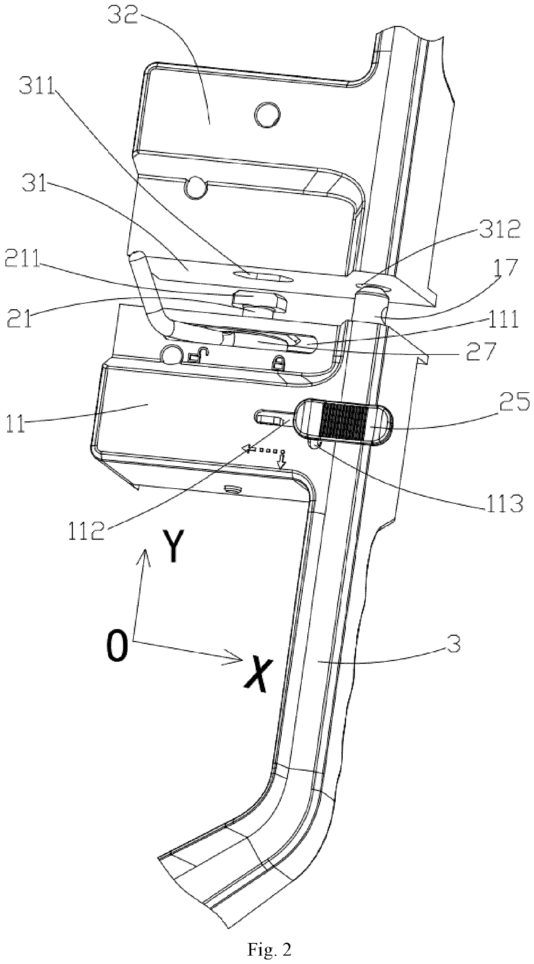

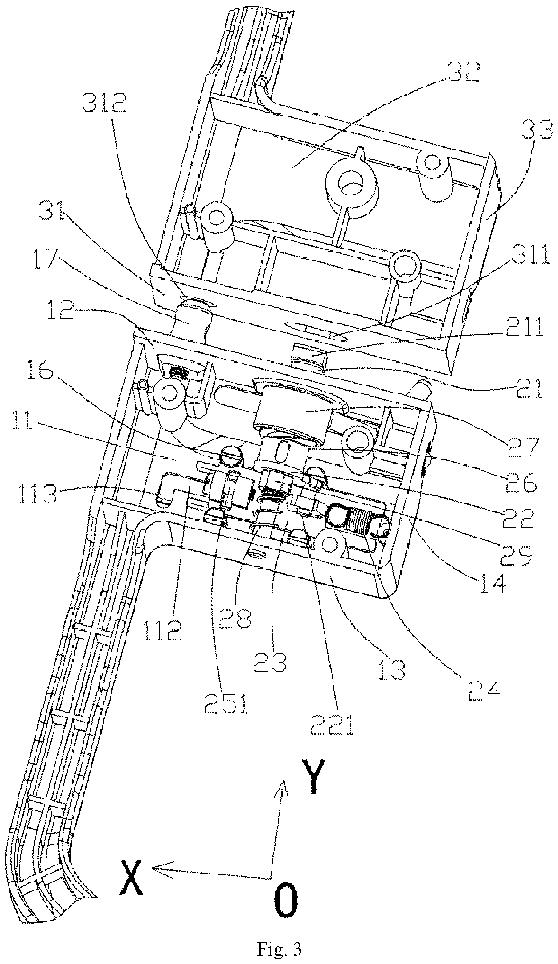

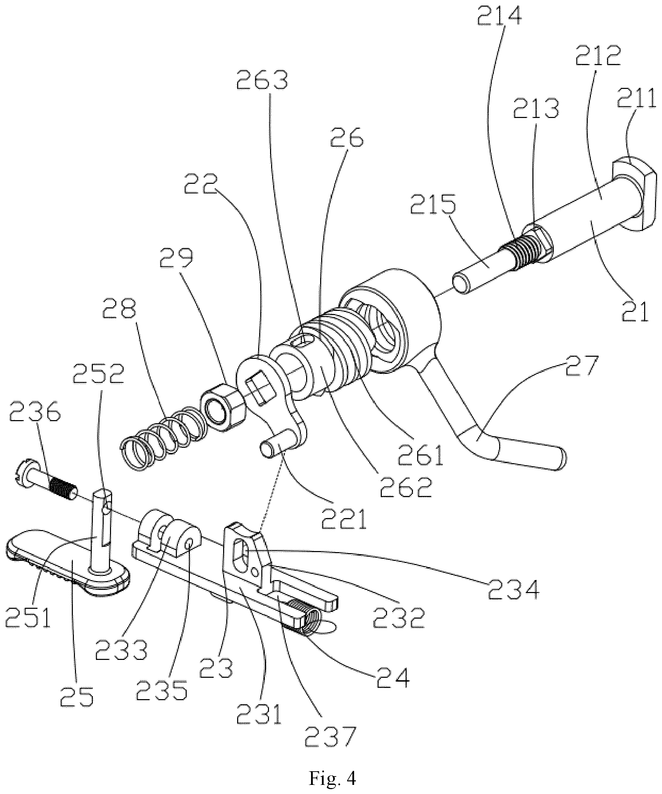

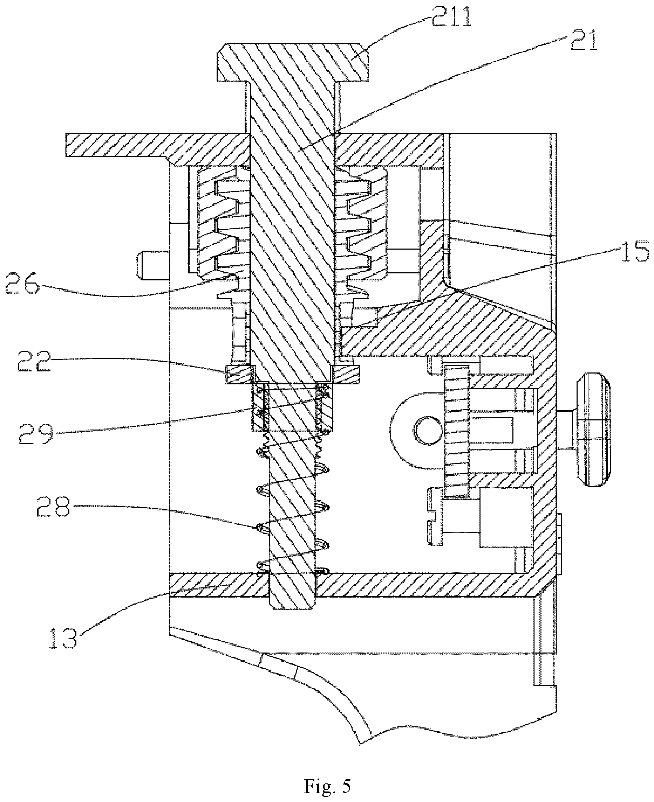

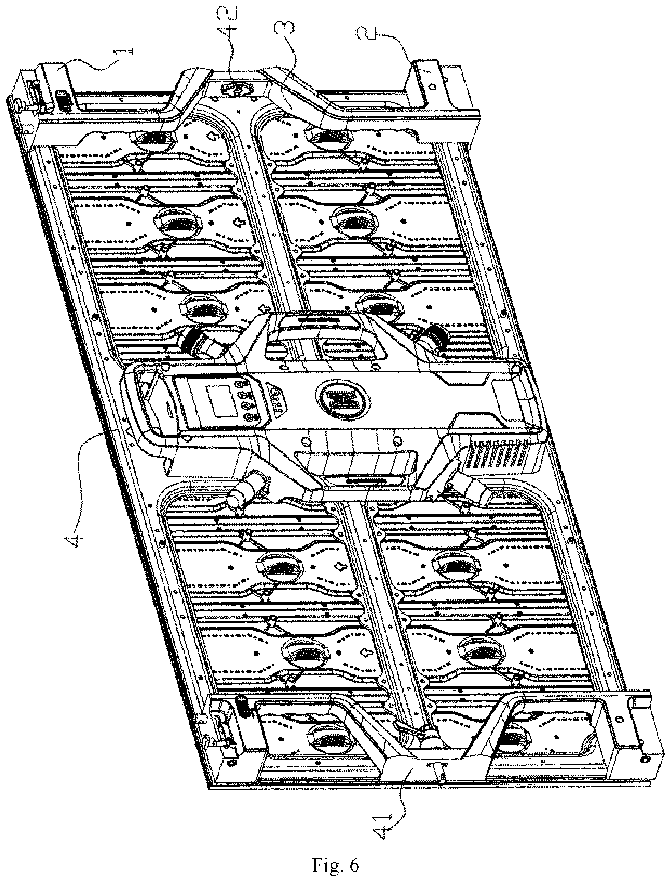

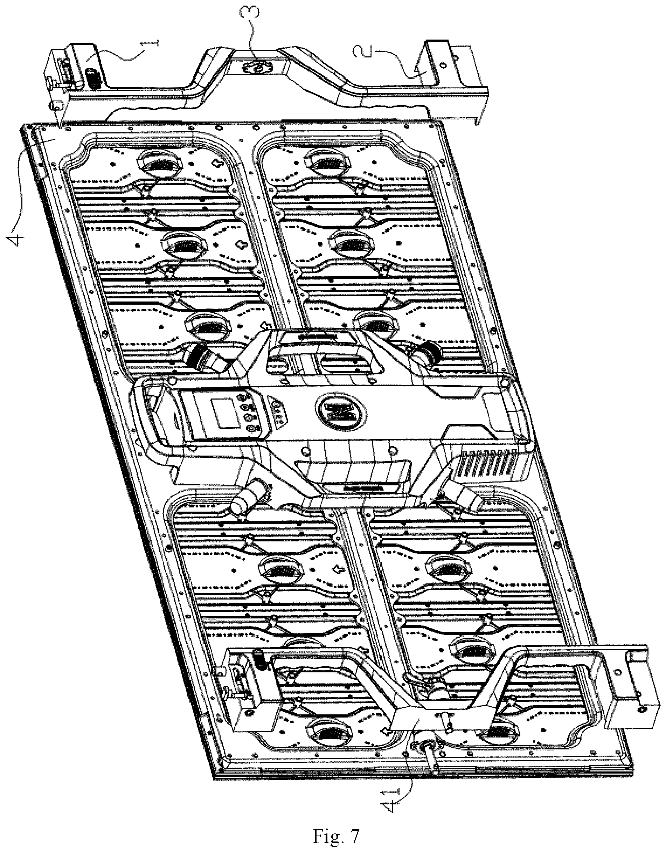

Fig. 1 shows a perspective view of the module connection structure in an embodiment of the invention. Fig. 2 shows a connection principle diagram 1 of the module connection structure shown in Fig. 1. Fig. 3 shows a connection principle diagram 2 of the module connection structure shown in Fig. 1. Fig. 4 shows an internal exploded view of a locking part of the module connection structure shown in Fig. 1. Fig. 5 shows a sectional view of the locking part of the module connection structure shown in Fig. 1. Fig. 6 shows a structural view of the module connection structures, installed on LED display screen unit boxes, shown in Fig. 1. Fig. 7 shows an exploded view of Fig. 6. In this embodiment, OX refers to a leftward direction, and OY refers to an upward direction.

Please refer to Fig. 1 to Fig. 7, the module connection structure comprises a locking art 1, a cooperation part 2, and a handle 3, wherein the locking part 1 includes a locking part front part 11, a locking part top plate 12, a locking part bottom plate 13, a hanger rod 21, a rotation sheet 22, a slide plate 23, an extension spring 24, a slidable shifting sheet 25, a threaded bushing 26, a locking handle 27, and a compression spring 28;

A hand lever rotation hole 111 and a shifting sheet slide hole 112 which are in a strip shape and in parallel are formed in the locking part front plate 11; the locking part top plate 12 and the locking part bottom plate 13 are oppositely arranged on one side of the locking part front plate 11; the hanger rod 21 movably penetrates through the locking part top plate 12 and the locking part bottom plate 13, is perpendicular to the hand lever rotation hole 111 and has an end stretching out of the locking part top plate 12 to radially extend to form a strip-shaped block 211; the rotation sheet 22 is fixedly connected to the middle of the hanger rod 21; the slide plate 23 is connected to the rotation sheet 22; the extension spring 24 has one end connected to the slide plate 23 and the other end fixed to the locking part front plate 11 in an extension state; the slidable shifting sheet 25 is arranged on the other side of the locking part front plate 11 and is connected to the slide plate 23 through a shifting sheet connection rod 251 penetrating through the shifting sheet slide hole 112; the threaded bushing 26 is disposed on the hanger rod 21 and is peripherally provided with a threaded segment 261 and a non-threaded segment 262, an end, provided with the non-threaded segment 262, of the threaded bushing 26 abuts against the rotation sheet 22, a slot 263 parallel to the axis of the hanger rod is formed in the non-threaded segment 262, and a limit column 15 is arranged on the locking part front plate 11 and is located in the slot 263; the locking hand lever 27 is in threaded connection with the threaded segment 261 of the threaded bushing and has an end, far away from the rotation sheet 22, abutting against the locking part top plate 12; and the compression spring 28 is arranged on the hanger rod 21 between the rotation sheet 22 and the locking part bottom plate 13 and is in a compressed state; and

The cooperation part 2 includes a cooperation part bottom plate 31 which is parallel to the locking part top plate 12 and is formed with a location hole 311 identical to the strip-shaped block 211 in shape; and the handle 3 is connected between the locking part top plate 12 and the cooperation part bottom plate 13.

According to the invention, the locking part 1 and the cooperation part 2 are integrally arranged at the head end and the tail end of the handle 3. When a plurality of modules need to be connected together, the module connection structure is arranged on each module first, and then the cooperation part of the module is fixedly connected to the locking part of the adjacent module. When the modules are connected, workers can align the modules in place and can perform operations conveniently through the handle, and using is convenient. After the modules are connected, the modules are connected together through a plurality of handles, and a whole frame is formed in a plane having the module located between every two adjacent handles. Compared with existing module assembly structures which are only arranged at local edges of modules and are likely to get loose if the modules are unaligned slightly, the handle of the module connection structure of the invention is attached to each module at the overall altitude, and the cooperation part and the locking part are connected to the head end and the tail end of the handle, so that the location is convenient, and the stress directions of the head end and the tail end are consistent, which fulfills stability and firmness.

According to the invention, two vertically adjacent modules are connected through the hanger rod 21 and the strip-shaped block 211. When the module connection structure is vertically arranged on one module with the upper part provided with the locking part 1 and the lower part provided with the cooperation part 2, the two adjacent modules are locked as follows: in an initial state, the strip-shaped block 211 is perpendicular to the location hole 311 in the cooperation part bottom plate 31, the slidable shifting sheet 25 is shifted leftwards, the slide plate 23 overcomes the tensile force from the extension spring 24 to move leftwards to synchronously drive the rotation sheet 22 to rotate so as to drive the hanger rod 21 to rotate; when the hanger rod 21 rotates by 90°, the direction of the strip-shaped block 211 is adapted to the location hole 311; and the strip-shaped block 211 enters the location hole 311, the slidable shifting sheet 25 is released, and the rotation sheet 22 returns to the original position under the action of the tensile force from the extension spring 24, so that the two modules are connected together. When to be disassembled, the two modules can be separated as long as the slidable shifting sheet 25 is shifted to remove the hanger rod 21. During operation, a worker aligns and stably holds the two modules, holds the handle with one hand, and then shifts the slidable shifting sheet 25 with the thumb to complete the installation, so that the assembly and disassembly can be independently completed by one worker. Thus, the labor intensity is reduced, other tools such as a screwdriver do not need to be used, the working efficiency is improved, the construction period is shortened, and the usage cost is decreased.

According to the invention, the two connected modules are further locked through the threaded bushing 26 and the locking hand lever 27. The specific process is as follows: the upper end of the threaded bushing 26 abuts against the locking part top plate 13 under the reactive force from the compression spring 28, the slot 263 is formed in the periphery of the threaded bushing 26 which is able to slide in the limit column 15 and is prevented against rotation at the same time, the locking hand lever 27 incapable of moving upwards and downwards is rotated to drive the threaded bushing 26 to move downwards through the rotation of threads so as to decrease the distance between the two modules, so that the two modules are further locked. Thus, after being assembled, the two modules can be locked more firmly to prevent the junction surfaces of the two modules against looseness, so that the installation is firm and stable.

Furthermore, the hanger rod 21 includes a thick segment 212, a step segment 213, a hanger rod threaded segment 214, and a thin segment 215 which are sequentially arranged in an axial direction, wherein the thick segment 212 is connected to the strip-shaped block 211; the step segment 213 has a square radial section which has a side length not greater than the diameter of the thick segment, and a square hole matched with the square step segment is formed in the rotation sheet 22 installed on the step segment 213; a stop nut 29 is installed on the hanger rod threaded segment 214; and the thin segment 215 penetrates through the locking part bottom plate 13.

The hanger rod 21 has an external diameter gradually decreased from one end provided with the strip-shaped block 211 to the other end to conveniently penetrate through the locking part top plate 12 and then penetrate through the locking part bottom plate 13 after other parts are installed, and the rotation sheet 22 is fixed to the hanger rod through a square lug boss and has two ends axially fixed by the thick segment 212 and the stop nut 29.

Furthermore, the slide plate 23 includes a flat plate part 231, a rotation sheet connection part 232, and shifting sheet connection parts 233, wherein the rotation sheet connection part 232 is formed on one face of the flat plate part 231 and is formed with a rotation sheet installation hole 234 parallel to the hanger rod 21 in an axial direction, a rotation sheet driving rod 221 is arranged on the rotation sheet 22 and is installed in the rotation sheet installation hole 234; and two shifting sheet connection parts 233 are oppositely arranged and are formed with shifting sheet installation holes 235, a flat plate through hole is formed in the flat plate part 231 between the two shifting sheet connection parts, the shifting sheet connection rod 251 has one end fixed to the slidable shifting sheet 25 and the other end formed with a connection rod through hole 252, and the end, formed with the connection rod through hole, of the shifting sheet connection rod penetrates through the shifting sheet slide hole and the flat plate through hole and is connected to the slide plate 23 through a rotary shaft pin 236 which penetrates through the shifting sheet installation holes and the connection rod through hole.

Thus, the slide plate 23 drives the rotation sheet 22 to rotate through the rotation sheet driving rod 221 to drive the hanger rod 21 to rotate and has one end connected to the slidable shifting sheet 25 through the rotary shaft pin 236 and the other end connected to a fixed position of the locking part front plate 11 through the extension spring 24, the extension spring 24, the slide plate 23, the shifting sheet slide hole 112, and the slidable shifting sheet 25 are located on the same line, and the shifting sheet slide hole 112 is formed in one side of the hanger rod 21, so that the slide plate 23 can slide back and forth in the shifting sheet slide hole 112.

Furthermore, the slide plate 23 further includes an opening part 237 formed in an end, far away from the shifting sheet connection parts 233, of the flat plate part 231, wherein the extension spring 24 is connected to the rotation sheet connection part 232, and the bottom of the opening part 237 is close to the rotation sheet connection part 232 to allow the extension spring 24 to extend.

The slide plate 23 is formed with the opening part 237 to accommodate the extension spring 24, so that all parts in the locking part are compactly arranged structurally. Compared with existing module installation structures which occupy an extremely large space, have an extremely large size and are inconvenient to use, the module connection structure of the invention is small in size and can be installed and used conveniently.

Furthermore, the locking part front plate 11 is provided with stop screws 16 to make sure that the flat plate part is fixed in a direction perpendicular to the locking part front plate and is able to slide in the shifting sheet slide hole 112.

Two stop screws 16 are respectively installed on two sides of the slide plate 23 in the sliding direction of the slide plate 23 to serve as slide grooves allowing the slide plate 23 to slide, and by adoption of the stop screws 16, the slide plate 23 can be conveniently installed on the locking part front plate 11.

Furthermore, a clamping slot 113 perpendicular to the shifting sheet slide hole 112 is formed in an end, far away from the extension spring 24, of the shifting sheet slide hole 112.

The clamping slot 113 and the shifting sheet slide hole 112 are connected to form an L shape, and before the strip-shaped block 211 of the hanger rod is inserted into the location hole 311, the shifting sheet connection rod 251 is clamped in the clamping slot 113 to provide convenience for workers in installation. The shifting sheet connection rod 251 connected to the slide plate 23 through the rotary shaft pin236 can slightly rotate and thus can be rotationally clamped in the clamping slot 113.

Furthermore, the locking part 1 further includes a location pin 17 which is arranged on the locking part top plate 12 and is parallel to the hanger rod 21; and the cooperation part 2 further includes a location pin hole 312 which is formed in the cooperation part bottom plate 31 and is matched with the location pin 17.

The location pin 17 and the hanger rod 21 are cooperatively used to limit the rotation of the two adjacent modules, so that the two modules are connected more regularly and tightly.

Furthermore, the cooperation part 2 further includes a cooperation part front plate 32 and a cooperation part side plate 33, wherein the cooperation part front plate 32 is connected to the cooperation part bottom plate 31; the cooperation part side plate 33 is connected to the cooperation part front plate 32 and the cooperation part bottom plate 31; the locking part 1 further includes a locking part side plate 14 connected to the locking part top plate 12, the locking part front plate 11, and the locking part bottom plate 13; and the cooperation part front plate 32, the cooperation part bottom plate 31, the locking part top plate 12, the locking part front plate 11, and the locking part bottom plate 13 perpendicularly extend to the same side of the handle 3.

When the module connection structure is installed on a box frame 4 of a rectangular LED module box, unlimitedly, one module connection structure is installed on one side or in the middle of the box frame 4, or a plurality of module connection structures are installed to make two module boxes connected more firmly. Preferably, the module connection structures are respectively fixed to the left side and the right side of the box frame and have the bottoms connected to one face of the box frame in an attached manner, and after two vertically adjacent module boxes are connected into a whole, the cooperation parts and the locking parts of two horizontally adjacent module boxes are attached respectively, so that the module boxes can be regularly located in the horizontal direction; and the two horizontally adjacent module boxes can be connected through the fixation of two horizontally adjacent handles.

Furthermore, the handle 3 includes:
A lock catch part which has an external end 41 located in the same plane as the cooperation part side plate 33 and the locking part side plate 14 and is formed with a lock catch installation hole 42 and provided with a lock catch 43 having one end provided with a lock catch handle 44 and the other end radially extending to form a protruding column 45.

Thus, the two vertically adjacent module boxes are fixedly connected through the locking of the locking part 1 and the cooperation part 2, and the two horizontally adjacent module boxes are tightly connected through the lock catch part, so that the splicing of a whole large LED display screen is fulfilled. Besides, the external end 41 is located in the same plane as the cooperation part side plate 33 and the locking part side plate 14, and two horizontally adjacent LED box modules can be attached and located, so that the whole spliced large LED display screen has good structural stability.

An LED display screen provided by the invention is formed by splicing a plurality of LED display screen unit boxes, and each LED display screen unit box comprise a box frame provided with the module connection structure according to any one of the above embodiments. Please refer to the above embodiments for the module connection structure particularly. This LED display screen adopts all the technical solutions of the above embodiments and thus have all the beneficial effects, which will not be repeated herein, of the technical solutions of the above embodiments.

The above embodiments are only preferred ones of the invention, and are not intended to limit the patent scope of the invention. All equivalent structural transformations obtained on the basis of the contents in the specification and the accompanying drawings of the invention under the concept of the invention or direct/indirect applications to other related technical fields should fall within the patent protection scope of the invention as defined in the appended claims.

## Claims

1. A module connection structure, comprising a locking part (1), a cooperation part (2), and a handle (3), wherein:
the locking part includes:
a locking part front plate (11) formed with a hand lever rotation hole and a shifting sheet slide hole which are in a strip shape and in parallel;
a locking part top plate (12) and a locking part bottom plate (13) which are oppositely arranged on a side of the locking part front plate;
a hanger rod (21) which movably penetrates through the locking part top plate and the locking part bottom plate, is perpendicular to the hand lever rotation hole and has an end stretching out of the locking part top plate to radially extend to form a strip-shaped block;
a rotation sheet (22) fixedly connected to a middle of the hanger rod;
a slide plate (23) connected to the rotation sheet;
an extension spring (24) which has an end connected to the slide plate and an end fixed to the locking part front plate in an extension state;
a slidable shifting sheet (25) which is arranged on a side of the locking part front plate and is connected to the slide plate through a shifting sheet connection rod penetrating through the shifting sheet slide hole;
a threaded bushing (26) which is disposed on the hanger rod and peripherally provided with a threaded segment and a non-threaded segment, wherein an end, provided with the non-threaded segment, of the threaded bushing abuts against the rotation sheet, a slot parallel to an axis of the hanger rod is formed in the non-threaded segment, and a limit column is arranged on the locking part front plate and located in the slot;
a locking hand lever (27) which is in threaded connection with the threaded segment of the threaded bushing and has an end, far away from the rotation sheet, abutting against the locking part top plate; and
a compression spring (28) which is arranged on the hanger rod between the rotation sheet and the locking part bottom plate and is in a compressed state;
the cooperation part (2) includes;
a cooperation part bottom plate (31) which is parallel to the locking part top plate and is formed with a location hole identical to the strip-shaped block in shape; and
the handle (3) is connected between the locking part top plate (12) and the cooperation part bottom plate (31).

2. The module connection structure according to Claim 1, wherein the hanger rod in an axial direction sequentially includes:
a thick segment (212) connected to the strip-shaped block;
a step segment (213)
having a square radial section which has a side length not greater than a diameter of the thick segment, wherein a square hole matched with the square step segment is formed in the rotation sheet installed on the step segment;
a hanger rod threaded segment provided with a stop nut; and
a thin segment (215) penetrating through the locking part bottom plate.

3. The module connection structure according to Claim 1, wherein the slide plate includes:
a flat plate part (231) which has a face formed with:
a rotation sheet connection part formed with a rotation sheet installation hole parallel to the hanger rod in an axial direction, wherein a rotation sheet driving rod is arranged on the rotation sheet and is installed in the rotation sheet installation hole; and
two opposite shifting sheet connection parts formed with shifting sheet installation holes, wherein a flat plate through hole is formed in the flat plate part between the two shifting sheet connection parts, the shifting sheet connection rod has an end fixed to the slidable shifting sheet and an end formed with a connection rod through hole, and the end, formed with the connection rod through hole, of the shifting sheet connection rod penetrates through the shifting sheet slide hole and the flat plate through hole and is connected to the slide plate through a rotary shaft pin which penetrates through the shifting sheet installation holes and the connection rod through hole.

4. The module connection structure according to Claim 3, wherein the slide plate further includes:
an opening part (237)
formed in an end, far away from the shifting sheet connection parts, of the flat plate part, wherein the extension spring is connected to the rotation sheet connection part, and a bottom of the opening part is close to the rotation sheet connection part to allow the extension spring to extend.

5. The module connection structure according to Claim 3, wherein the locking part front plate is provided with a stop screw (16) to make sure that the flat plate part is fixed in a direction perpendicular to the locking part front plate and is able to slide in the shifting sheet slide hole.

6. The module connection structure according to Claim 1, wherein a clamping slot (113) perpendicular to the shifting sheet slide hole is formed in an end, far away from the extension spring, of the shifting sheet slide hole.

7. The module connection structure according to Claim 1, wherein the locking part further includes:
a location pin (17) which is arranged on the locking part top plate and is parallel to the hanger rod; and
the cooperation part further includes:
a location pin hole which is formed in the cooperation part bottom plate and is matched with the location pin.

8. The module connection structure according to Claim 1, wherein the cooperation part further includes:
a cooperation part front plate (32) connected to the cooperation part bottom plate;
a cooperation part side plate (33) connected to the cooperation part front plate and the cooperation part bottom plate; and
the locking part further includes:
a locking part side plate (14) connected to the locking part top plate, the locking part front plate, and the locking part bottom plate, wherein the cooperation part front plate, the cooperation part bottom plate, the locking part top plate, the locking part front plate, and the locking part bottom plate perpendicularly extend to a same side of the handle.

9. The module connection structure according to Claim 8, wherein the handle includes:
a lock catch part which has an external end (41) located in a same plane as the cooperation part side plate and the locking part side plate and is formed with a lock catch installation hole (42) and provided with a lock catch (43) having an end provided with a lock catch handle (44) and an end radially extending to form a protruding column.

10. An LED display screen, being formed by splicing a plurality of LED display screen unit boxes, wherein each said LED display screen unit box comprises a box frame provided with the module connection structure according to any one of Claims 1-9.

## Patentansprüche

1. Modulverbindungsstruktur, die ein Verriegelungsteil (1), ein Kooperationsteil (2) und einen Griff (3) umfasst, wobei:
das Verriegelungsteil Folgendes beinhaltet:
eine Verriegelungsteilvorderplatte (11), die mit einem Handhebelrotationsloch und einem Schaltblechgleitloch ausgebildet ist, die in einer Streifenform und parallel sind;
eine Verriegelungsteiloberplatte (12) und eine Verriegelungsteilunterplatte (13), die auf einer Seite der Verriegelungsteilvorderplatte gegenüberliegend angeordnet sind;
eine Aufhängerstange (21), die durch die Verriegelungsteiloberplatte und die Verriegelungsteilunterplatte bewegbar eindringt, die senkrecht zu dem Handhebelrotationsloch steht und ein Ende aufweist, das sich aus der Verriegelungsteiloberplatte heraus dehnt, um sich radial zu erstrecken, um einen streifenförmigen Block auszubilden;
ein Rotationsblech (22), das mit einer Mitte der Aufhängerstange fest verbunden ist;
eine Gleitplatte (23), die mit dem Rotationsblech verbunden ist;
eine Zugfeder (24), die ein Ende, das mit der Gleitplatte verbunden ist, und ein Ende aufweist, das in einem Erstreckungszustand an der Verriegelungsteilvorderplatte befestigt ist;
ein gleitbares Schaltblech (25), das auf einer Seite der Verriegelungsteilvorderplatte angeordnet ist und mit der Gleitplatte durch eine Schaltblechverbindungsstange verbunden ist, die durch das Schaltblechgleitloch eindringt;
eine Gewindebuchse (26), die an der Aufhängerstange eingerichtet ist und peripher mit einem Segment mit Gewinde und einem Segment ohne Gewinde versehen ist, wobei ein Ende der Gewindebuchse, das mit dem Segment ohne Gewinde versehen ist, gegen das Rotationsblech anstößt, wobei ein Schlitz, der parallel zu einer Achse der Aufhängerstange liegt, in dem Segment ohne Gewinde ausgebildet ist, und wobei eine Begrenzungssäule auf der Verriegelungsteilvorderplatte angeordnet ist und in dem Schlitz fixiert ist;
einen Verriegelungshandhebel (27), der in Gewindeverbindung mit dem Segment mit Gewinde der Gewindebuchse steht und ein Ende aufweist, das, weit entfernt von dem Rotationsblech, gegen die Verriegelungsteiloberplatte anstößt; und
eine Druckfeder (28), die auf der Aufhängerstange zwischen dem Rotationsblech und der Verriegelungsteilunterplatte angeordnet ist und sich in einem zusammengedrückten Zustand befindet;
wobei das Kooperationsteil Folgendes beinhaltet;
eine Kooperationsteilunterplatte (31), die parallel zu der Verriegelungsteiloberplatte liegt und mit einem Fixierloch ausgebildet ist, das in seiner Form mit dem streifenförmigen Block identisch ist; und
der Griff (3) zwischen der Verriegelungsteiloberplatte (12) und der Kooperationsteilunterplatte (31) verbunden ist.

2. Modulverbindungsstruktur nach Anspruch 1, wobei die Aufhängerstange in einer axialen Richtung nacheinander Folgendes beinhaltet:
ein dickes Segment (212), das mit dem streifenförmigen Block verbunden ist;
ein Stufensegment (213), das einen quadratischen radialen Bereich aufweist, der eine Seitenlänge aufweist, die maximal ein Durchmesser des dicken Segments ist, wobei ein quadratisches Loch, das mit dem quadratischen Stufensegment übereinstimmt, in dem Rotationsblech ausgebildet ist, das auf dem Stufensegment installiert ist;
ein Aufhängerstangengewindesegment, das mit einer Anschlagmutter versehen ist; und
ein dünnes Segment (215), das durch die Verriegelungsteilunterplatte eindringt.

3. Modulverbindungsstruktur nach Anspruch 1, wobei die Gleitplatte Folgendes beinhaltet:
ein ebenes Plattenteil (231), das eine Fläche aufweist, die mit Folgendem ausgebildet ist:
einem Rotationsblechverbindungsteil, das mit einem Rotationsblechinstallationsloch ausgebildet ist, das parallel zu der Aufhängerstange in einer axialen Richtung liegt, wobei eine Rotationsblechaufhängerstange auf dem Rotationsblech angeordnet ist und in dem Rotationsblechinstallationsloch installiert ist; und
zwei gegenüberliegende Schaltblechverbindungsteile, die mit Schaltblechinstallationslöchern ausgebildet sind, wobei ein Durchgangsloch der ebenen Platte in dem ebenen Plattenteil zwischen den zwei Schaltblechverbindungsteilen ausgebildet ist, wobei die Schaltblechverbindungsstange ein Ende, das an dem gleitbaren Schaltblech befestigt ist, und ein Ende aufweist, das mit einem Verbindungsstangendurchgangsloch ausgebildet ist, und wobei das Ende der Schaltblechverbindungsstange, das mit dem Verbindungsstangendurchgangsloch ausgebildet ist, durch das Schaltblechgleitloch und das Durchgangsloch der ebenen Platte eindringt und mit der Gleitplatte durch einen rotierenden Wellenstift verbunden ist, der durch die Schaltblechinstallationslöcher und das Verbindungsstangendurchgangsloch eindringt.

4. Modulverbindungsstruktur nach Anspruch 3, wobei die Gleitplatte ferner Folgendes beinhaltet:
einen Öffnungsteil (237), der in einem Ende des ebenen Plattenteils ausgebildet ist, das von den Schaltblechverbindungsteilen weit entfernt ist, wobei die Zugfeder mit dem Rotationsblechverbindungsteil verbunden ist und eine Unterseite des Öffnungsteils nahe an dem Rotationsblechverbindungsteil liegt, um der Zugfeder zu ermöglichen, sich zu erstrecken.

5. Modulverbindungsstruktur nach Anspruch 3, wobei die Verriegelungsteilvorderplatte mit einer Anschlagschraube (16) versehen ist, um sicherzustellen, dass das ebene Plattenteil in einer Richtung befestigt ist, die senkrecht zu der Verriegelungsteilvorderplatte ist und die in der Lage ist, in das Schaltblechgleitloch zu gleiten.

6. Modulverbindungsstruktur nach Anspruch 1, wobei ein Spannschlitz (113), der senkrecht zu dem Schaltblechgleitloch liegt, in einem Ende des Schaltblechgleitlochs ausgebildet ist, das von der Zugfeder weit entfernt ist.

7. Modulverbindungsstruktur nach Anspruch 1, wobei das Verriegelungsteil ferner Folgendes beinhaltet:
einen Fixierstift (17), der auf der Verriegelungsteiloberplatte angeordnet ist und parallel zu der Aufhängerstange liegt; und
wobei das Kooperationsteil ferner Folgendes beinhaltet:
ein Fixierstiftloch, das in der Kooperationsteilunterplatte ausgebildet ist und mit dem Fixierstift übereinstimmt.

8. Modulverbindungsstruktur nach Anspruch 1, wobei das Kooperationsteil ferner Folgendes beinhaltet:
eine Kooperationsteilvorderplatte (32), die mit der Kooperationsteilunterplatte verbunden ist;
eine Kooperationsteilseitenplatte (33), die mit der Kooperationsteilvorderplatte und der Kooperationsteilunterplatte verbunden ist; und
wobei das Verriegelungsteil ferner Folgendes beinhaltet:
eine Verriegelungsteilseitenplatte (14), die mit der Verriegelungsteiloberplatte, der Verriegelungsteilvorderplatte und der Verriegelungsteilunterplatte verbunden ist, wobei die Kooperationsteilvorderplatte, die Kooperationsteilunterplatte, die Verriegelungsteiloberplatte, die Verriegelungsteilvorderplatte und die Verriegelungsteilunterplatte sich senkrecht zu einer selben Seite des Griffs erstrecken.

9. Modulverbindungsstruktur nach Anspruch 8, wobei der Griff Folgendes beinhaltet:
ein Riegelauffangsteil, das ein äußeres Ende (41) aufweist, das in einer selben Ebene wie die Kooperationsteilseitenplatte und die Verriegelungsteilseitenplatte fixiert ist und das mit einem Riegelauffangsinstallationsloch (42) ausgebildet ist und mit einer Riegelauffangsvorrichtung versehen ist, die ein Ende, das mit einem Riegelauffangsgriff (44) versehen ist, und ein Ende aufweist, das sich radial erstreckt, um eine hervorstehende Säule auszubilden.

10. LED-Anzeigebildschirm, der durch Spleißen mehrerer LED-Anzeigebildschirmeinheitskästen ausgebildet wird, wobei jeder LED-Anzeigebildschirmeinheitskasten ein Kastengehäuse umfasst, das mit der Modulverbindungsstruktur nach einem der Ansprüche 1-9 versehen ist.

## Revendications

1. Structure de liaison de module, comprenant une partie de verrouillage (1), une partie de coopération (2) et une poignée (3), dans laquelle :
la partie de verrouillage comporte :
une plaque avant de partie de verrouillage (11) formée avec un trou de rotation de levier manuel et un trou de coulissement de feuille à déplacement qui sont en forme de bande et en parallèle ;
une plaque supérieure de partie de verrouillage (12) et une plaque inférieure de partie de verrouillage (13) qui sont agencées de manière opposée sur un côté de la plaque avant de partie de verrouillage ;
une tige de suspension (21) qui pénètre de manière mobile à travers la plaque supérieure de la partie de verrouillage et la plaque inférieure de la partie de verrouillage, est perpendiculaire au trou de rotation du levier manuel et présente une extrémité s'étendant hors de la plaque supérieure de la partie de verrouillage pour s'étendre radialement afin de former un bloc en forme de bande ;
une feuille de rotation (22) reliée fixement à un milieu de la tige de suspension ;
une plaque coulissante (23) reliée à la feuille de rotation ;
un ressort d'extension (24) qui présente une extrémité reliée à la plaque coulissante et une extrémité fixée à la plaque avant de la partie de verrouillage dans un état d'extension ;
une feuille à déplacement coulissante (25) qui est agencée sur un côté de la plaque avant de la partie de verrouillage et est reliée à la plaque coulissante par une tige de liaison de feuille à déplacement pénétrant à travers le trou de coulissement de feuille à déplacement ;
une bague filetée (26) qui est disposée sur la tige de suspension et pourvue en périphérie d'un segment fileté et d'un segment non fileté, une extrémité, pourvue du segment non fileté, de la bague filetée venant en butée contre la feuille de rotation, une fente parallèle à un axe de la tige de suspension étant formée dans le segment non fileté, et une colonne limite étant agencée sur la plaque avant de la partie de verrouillage et située dans la fente ;
un levier manuel de verrouillage (27) qui est en raccordement fileté avec le segment fileté de la bague filetée et présente une extrémité, éloignée de la feuille de rotation, venant en butée contre la plaque supérieure de la partie de verrouillage ; et
un ressort de compression (28) qui est agencé sur la tige de suspension entre la feuille de rotation et la plaque inférieure de la partie de verrouillage et qui est dans un état comprimé ;
la partie de coopération comporte :
une plaque inférieure de partie de coopération (31) qui est parallèle à la plaque supérieure de partie de verrouillage et est formée avec un trou de positionnement identique au bloc en forme de bande ; et
la poignée (3) est reliée entre la plaque supérieure de la partie de verrouillage (12) et la plaque inférieure de la partie de coopération (31).

2. Structure de liaison de module selon la revendication 1, dans laquelle, dans une direction axiale, la tige de suspension comporte séquentiellement :
un segment épais (212) relié au bloc en forme de bande ;
un segment de marche (213) ayant une section radiale carrée qui présente une longueur latérale non supérieure à un diamètre du segment épais, dans lequel un trou carré correspondant au segment de marche carré est formé dans la feuille de rotation installée sur le segment de marche ;
un segment fileté de tige de suspension muni d'un écrou d'arrêt ; et
un segment mince (215) pénétrant à travers la plaque inférieure de la partie de verrouillage.

3. Structure de liaison de module selon la revendication 1, dans laquelle la plaque coulissante comporte :
une partie de plaque plate (231) qui présente une face formée avec :
une partie de liaison de feuille de rotation formée avec un trou d'installation de feuille de rotation parallèle à la tige de suspension dans une direction axiale, une bielle motrice de feuille de rotation étant agencée sur la feuille de rotation et installée dans le trou d'installation de feuille de rotation ; et
deux parties de liaison de feuille à déplacement opposées formées avec des trous d'installation de feuille à déplacement, un trou traversant de plaque plate étant formé dans la partie de plaque plate entre les deux parties de liaison de feuille à déplacement, la tige de liaison de feuille à déplacement ayant une extrémité fixée à la feuille à déplacement coulissante et une extrémité formée avec un trou traversant de tige de liaison, et l'extrémité, formée avec le trou traversant de tige de liaison, de la tige de liaison de feuille à déplacement pénètre à travers le trou de coulissement de feuille à déplacement et le trou traversant de plaque plate et est reliée à la plaque coulissante par un axe d'arbre rotatif qui pénètre à travers les trous d'installation de la feuille à déplacement et le trou traversant la tige de liaison.

4. Structure de liaison de module selon la revendication 3, dans laquelle la plaque coulissante comporte en outre :
une partie d'ouverture (237) formée dans une extrémité, éloignée des parties de liaison de feuille à déplacement, de la partie de plaque plate, le ressort d'extension étant relié à la partie de liaison de feuille de rotation, et un fond de la partie d'ouverture étant proche de la partie de liaison de feuille de rotation pour permettre l'extension du ressort d'extension.

5. Structure de liaison de module selon la revendication 3, dans laquelle la plaque avant de la partie de verrouillage est pourvue d'une vis d'arrêt (16) pour garantir que la partie de plaque plate est fixée dans une direction perpendiculaire à la plaque avant de la partie de verrouillage et est capable de coulisser dans le trou de coulissement de feuille à déplacement.

6. Structure de liaison de module selon la revendication 1, dans laquelle une fente de serrage (113) perpendiculaire au trou de coulissement de feuille à déplacement est formée dans une extrémité du trou de coulissement de feuille à déplacement, éloignée du ressort d'extension.

7. Structure de liaison de module selon la revendication 1, dans laquelle la partie de verrouillage comporte en outre :
un tenon de positionnement (17) qui est agencé sur la plaque supérieure de la partie de verrouillage et qui est parallèle à la tige de suspension ; et
la partie de coopération comporte en outre :
un trou de tenon de positionnement qui est formé dans la plaque inférieure de la partie de coopération et qui correspond au tenon de positionnement.

8. Structure de liaison de module selon la revendication 1, dans laquelle la partie de coopération comporte en outre :
une plaque avant de partie de coopération (32) reliée à la plaque inférieure de partie de coopération ;
une plaque latérale de partie de coopération (33) reliée à la plaque avant de partie de coopération et à la plaque inférieure de partie de coopération ; et
la partie de verrouillage comporte en outre :
une plaque latérale de partie de verrouillage (14) reliée à la plaque supérieure de partie de verrouillage, à la plaque avant de partie de verrouillage et à la plaque inférieure de partie de verrouillage, la plaque avant de partie de coopération, la plaque inférieure de partie de coopération, la plaque supérieure de partie de verrouillage, la plaque avant de partie de verrouillage et la plaque inférieure de partie de verrouillage s'étendant perpendiculairement d'un même côté de la poignée.

9. Structure de liaison de module selon la revendication 8, dans laquelle la poignée comporte :
une partie de loquet de verrouillage qui présente une extrémité externe (41) située dans un même plan que la plaque latérale de partie de coopération et la plaque latérale de partie de verrouillage et est formée avec un trou d'installation de loquet de verrouillage (42) et munie d'un loquet de verrouillage ayant une extrémité munie d'une poignée de loquet de verrouillage (44) et d'une extrémité s'étendant radialement pour former une colonne en saillie.

10. Écran d'affichage à DEL, formé en épissant une pluralité de boîtes d'unité d'écran d'affichage à DEL, dans lequel chaque dite boîte d'unité d'écran d'affichage à DEL comprend un cadre de boîte pourvu de la structure de liaison de module selon l'une quelconque des revendications 1 à 9.
